# EUROPEAN PATENT APPLICATION

(11) **EP 2 873 827 A1**
(43) Date of publication of application: **20.05.2015**
(21) Application number: 14162301.7
(22) Date of filing: 28.03.2014
(51) Int. Cl.: F02B 21/00, B60K 6/20, B60L 1/00, F01N 5/04, F02B 29/02, F02B 33/34, F02B 41/10, F04F 5/02, F04F 5/42, H02J 7/14, B60K 6/48, F02B 33/44

(54) **Turbocharger system for additionally supplying compressed air to intake manifold**

(30) Priority: 14.11.2013 KR 20130138422
(71) Applicant: Hyundai Motor Company, Seoul 137-938 (KR)
(72) Inventor: KIM, Seung-Gi, 422-060 Bucheon-si, Gyeonggi-do (KR)
(74) Representative: Viering, Jentschura & Partner Patent- und Rechtsanwälte

(57) **Abstract**

A turbocharger system may include an air storage tank provided in a vehicle so as to supply compressed air to an intake manifold of the vehicle provided with a turbocharger, a compressor connected to the air storage tank to supply compressed air to the air storage tank, and a compressed air guidance device connected to the air storage tank and provided in the intake manifold to guide mixing of the compressed air of the air storage tank with introduced atmospheric air.

## Description

### CROSS-REFERENCE(S) TO RELATED APPLICATIONS

The present application claims priority to Korean Patent Application No. 10-2013-0138422, filed on November 14, 2013, the entire contents of which is incorporated herein for all purposes by this reference.

### BACKGROUND OF THE INVENTION

### Field of the Invention

Exemplary embodiments of the present invention relate to a turbocharger system for increasing efficiency of an internal combustion engine having a low displacement; and, particularly, to a turbocharger system for additionally supplying compressed air to an intake manifold capable of improving a supercharging effect by supplying compressed air to one opened side of an intake manifold.

### Description of Related Art

In general, there are two methods of increasing output of a vehicle. The easiest method is to increase a displacement of the vehicle. The displacement is to add volumes of respective cylinders. Since the more the displacement is increased, the more air and fuel are supplied and combusted, explosive power is increased and thus output is naturally increased.

However, this method is uneconomical in many ways. The reason is because the number of cylinders has to be increased for increasing the displacement. Accordingly, the volume of the engine and the weight of the vehicle are increased, resulting in an increase in price of the vehicle and an increase in maintenance cost due to significant consumption of fuel.

Another method of increasing the output of the vehicle is to increase density of air, namely, filling of air introduced into an internal combustion engine in order to achieve high efficiency of the internal combustion engine.

To this end, a turbocharger engine (turbo engine) for filling of air is developed. The word "turbo" means a turbine derived from the Latin word for turbo.

The velocity of exhaust gas discharged after explosion in the internal combustion engine is very fast. When a turbine capable of obtaining rotary power is installed to an outlet from which the exhaust gas is discharged, the turbine is rapidly rotated by the velocity of the exhaust gas. As the velocity of the internal combustion engine is increased, an amount of the exhaust gas is larger and the velocity of rotation of the turbine is further increased.

A rotary shaft of the turbine is connected to an inlet and an inlet turbine is mounted to be symmetrical to the turbine so that the inlet turbine is rotated with force of the turbine rotated by the exhaust gas and compresses atmospheric air so as to supply the compressed air to the internal combustion engine.

Accordingly, air introduced into the internal combustion engine is compressed by rotating the mounted turbine by exhaust pressure of the exhaust gas discharged from the engine and using the inlet turbine connected to one side of the shaft of the turbine such that rotation of inlet turbine is synchronized with that of the turbine, and thus the output is increased.

When intake air is introduced into a cylinder in a compressed state rather than being introduced thereinto by a piston, the filling rate of air in the cylinder is further increased.

However, since this method causes the output of an engine RPM to be different at low speed and high speed, a two- or three-stage supercharger is required for compression of air. Therefore, the system is complicated and the weight of the engine is increased, the above method is inefficient and uneconomical in terms of regenerative efficiency of discharge energy of the exhaust gas.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY

Various aspects of the present invention are directed to providing a turbocharger system for additionally supplying compressed air to an intake manifold capable of overcoming a limit to improvement in fuel efficiency due to low energy efficiency during idling of an internal combustion engine or driving at low speed and low load by mounting a harvesting generation system for a vehicle having a motor generator operable using discharge energy, namely exhaust pressure of exhaust gas generated by combustion of the engine on an exhaust pipe conduit, driving an electric power type air compression device using power stably supplied through the harvesting generation system for a vehicle, and allowing air introduced into the engine to form compressed air optimized in a driving state of the vehicle.

In an aspect of the present invention, a turbocharger system may include an air storage tank provided in a vehicle so as to supply compressed air to an intake manifold of the vehicle provided with a turbocharger, a compressor connected to the air storage tank to supply compressed air to the air storage tank, and a compressed air guidance device connected to the air storage tank and provided in the intake manifold to guide mixing of the compressed air of the air storage tank with introduced atmospheric air.

An air supply control unit is provided on a compressed air conduit connecting the compressor to the air storage tank.

The compressed air guidance device may include a cylindrical mounting portion which is mounted to one opened end of the intake manifold and is fitted into the one opened end of the intake manifold, a nozzle portion to guide the introduced atmospheric air to the intake manifold, a connection portion connecting the cylindrical mounting portion to the air storage tank through a compressed air conduit coupled to the connection portion, an air passage formed around an outer periphery of the cylindrical mounting portion as a space so as to may have a ring shape of a predetermined width, wherein the air passage is fluid-connected to the connection portion, and an insertion portion formed by cutting the cylindrical mounting portion in a circular shape such that the compressed air is injected from the air passage to a tip of the nozzle portion through the insertion portion toward the intake manifold.

The compressed air introduced into the air passage through the connection portion turns within the air passage, wherein the compressed air turning within the air passage is vertically injected toward the intake manifold through the insertion portion, and wherein a pressure of the intake manifold is relatively decreased by the compressed air injected through the insertion portion, compared with an atmospheric pressure, so that the atmospheric air is introduced into the intake manifold.

In another aspect of the present invention, a turbocharger generation system may include an air storage tank provided in a vehicle so as to supply compressed air to an intake manifold of the vehicle provided with a turbocharger, a compressor connected to the air storage tank to supply compressed air to the air storage tank, a compressed air guidance device provided in the intake manifold to guide mixing of the compressed air of the air storage tank with an introduced atmospheric air, and a turbo generator provided in an exhaust manifold so as to produce power using exhaust gas of the vehicle.

An air supply control unit is provided on a compressed air conduit connecting the compressor to the air storage tank.

The turbocharger generation system may further include a battery provided in the vehicle in order to store power produced by the turbo generator.

The turbo generator may include an inverter which converts the power generated by the turbo generator into direct current.

A power supply device is provided between the turbo generator and the battery.

The power supply device may include a PDU (POWER DISTRIBUTION UNIT) to distribute high-voltage power and an LDC (LOW VOLTAGE DC-DC CONVERTER) to distribute 24V power.

In further another aspect of the present invention, a turbocharger generation system for a hybrid vehicle may include an air storage tank provided in a vehicle so as to supply compressed air to an intake manifold of the vehicle provided with a turbocharger, a compressor connected to the air storage tank to supply compressed air to the air storage tank, a compressed air guidance device provided in the intake manifold to guide mixing of the compressed air of the air storage tank with an introduced atmospheric air, a turbo generator provided in an exhaust manifold so as to produce power using exhaust gas of the vehicle, a battery to store power produced by the turbo generator , and a motor supplied with the power from the battery to generate driving force of the vehicle.

The turbo generator may include an inverter which converts the power produced by the turbo generator into direct current.

The motor may include an inverter which converts the power supplied from the battery into alternating current.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a diagram schematically illustrating a turbocharger system for additionally supplying compressed air to an intake manifold according to various exemplary embodiments of the present invention.
FIG. 2 is a cross-sectional view and a perspective view illustrating a compressed air guidance device included in the turbocharger system for additionally supplying compressed air to an intake manifold in FIG. 1.
FIG. 3 is a diagram schematically illustrating a turbocharger system for additionally supplying compressed air to an intake manifold according to various exemplary embodiments of the present invention.
FIG. 4 is a diagram schematically illustrating a turbocharger system for additionally supplying compressed air to an intake manifold according to various exemplary embodiments of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DESCRIPTION OF SPECIFIC EMBODIMENTS

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

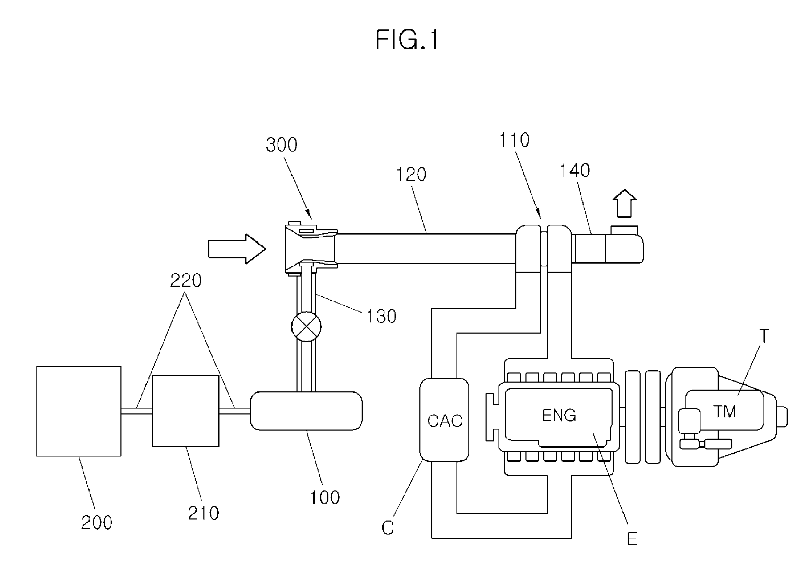

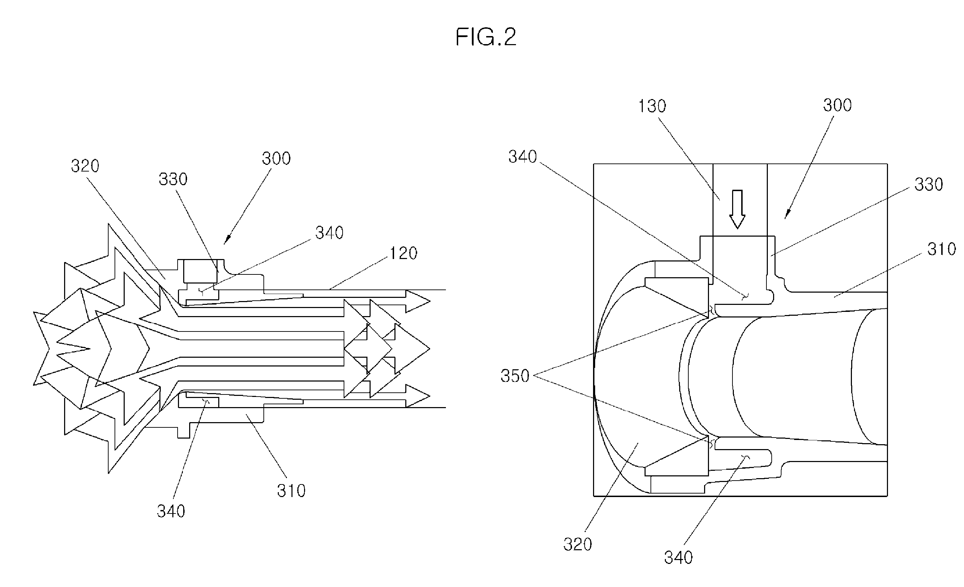

FIG. 1 is a diagram schematically illustrating a turbocharger system for additionally supplying compressed air to an intake manifold according to a first embodiment of the present invention. FIG. 2 is a cross-sectional view and a perspective view illustrating a compressed air guidance device included in the turbocharger system for additionally supplying compressed air to an intake manifold in FIG. 1.

As shown in FIG. 1, a turbocharger system according to a first embodiment of the present invention includes an air storage tank 100 provided in a vehicle so as to supply compressed air to an intake manifold 120 of the vehicle provided with a turbocharger 110, a compressor 200 to supply compressed air to the air storage tank 100, and a compressed air guidance device 300 provided in the intake manifold 120 to guide mixing of supplied compressed air with introduced atmospheric air.

The air storage tank 100 is a container to storage compressed air supplied to the intake manifold 120, and continuously supplies compressed air having the constant pressure to the intake manifold 120 for preparing for malfunction of the compressor 200 due to overload thereof.

The compressor 200 is operated by application of power and is operated together with starting of an internal combustion engine.

The turbocharger system according to the first embodiment of the present invention includes an air supply control unit 210 provided on a compressed air conduit 220 connecting the compressor 200 to the air storage tank 100. The air supply control unit 210 compares a total amount of compressed air stored in the air storage tank 100 with a total amount of compressed air to be supplied to the intake manifold 120 depending upon an RPM of the internal combustion engine, and then adjusts an amount of compressed air introduced from the compressor 200 into the air storage tank 100.

The turbocharger 110 is provided between the intake manifold 120 and an exhaust manifold 140 of the internal combustion engine E and a turbine included in the turbocharger 110 is rotated by pressure of discharged exhaust gas, thereby compressing atmospheric air introduced through the intake manifold 120 so that the compressed atmospheric air is supplied to a cylinder included in the internal combustion engine.

In addition, a charge air cooler C to decrease temperature of air which is compressed during passing through an inlet turbine of the turbocharger 110 and is introduced into the cylinder of the internal combustion engine E is provided on a pipe connection the inlet turbine to the cylinder.

The compressed air guidance device 300 is a device which increases output of the internal combustion engine E by introducing twenty to forty times amount of atmospheric air through the intake manifold 120 using a small amount of compressed air.

As shown in FIG. 2, the compressed air guidance device 300 includes a cylindrical mounting portion 310 which is mounted to one opened end of the intake manifold 120 and is fitted into one opened end of the intake manifold 120, a nozzle portion 320 to guide air in the atmosphere to the intake manifold 120, a connection portion 330 which is connected through a compressed air conduit 130 to the air storage tank 100, an air passage 340 as a space which is connected to the connection portion 330 and is defined along the outer periphery of the mounting portion 310 so as to have a ring shape of a predetermined width, and an insertion portion 350 formed by cutting the mounting portion 310 in a circular shape such that compressed air may be injected from the air passage 340 to a tip of the nozzle portion 320 toward the intake manifold 120.

The compressed air introduced into the air passage 340 through the connection portion 330 turns within the air passage 340, and the compressed air turning within the air passage 340 is vertically injected toward the intake manifold 120 through the insertion portion 350.

The pressure of the intake manifold 120 is decreased by the compressed air injected through the insertion portion 350, compared with the atmospheric pressure, and thus atmospheric air is plentifully introduced into the intake manifold 120.

In this case, the compressed air injected through the insertion portion 350 flows in a state of being pressed against an inner side wall of the intake manifold 120 by a Coanda effect.

The term "Coanda effect" refers to the tendency of a stream of fluid to attach itself to a nearby surface and to remain attached.

In this case, the atmospheric air present in a diffused state in the atmosphere is concentrated through the nozzle portion 320 and generates friction with the compressed air flowing along the inner surface of the intake manifold 120, thereby being synchronized with flow velocity of the compressed air.

In this case, since the flow velocity of air in the atmosphere increases as the flow velocity of compressed air increases, a total amount of introduced air is increased.

Such a compressed air guidance device 300 may introduce several ten times amount of air into the internal combustion engine even though consuming a small amount of compressed air. Therefore, noise may be reduced to one-third, compared with a supercharger using only a typical turbocharger.

In addition, compressed air having ultrahigh velocity flow may be supplied to the intake manifold 120 through the compressed air guidance device 300, and the compressed air guidance device 300 may be easily manufactured and may reduce generation of failure due to a simple configuration thereof.

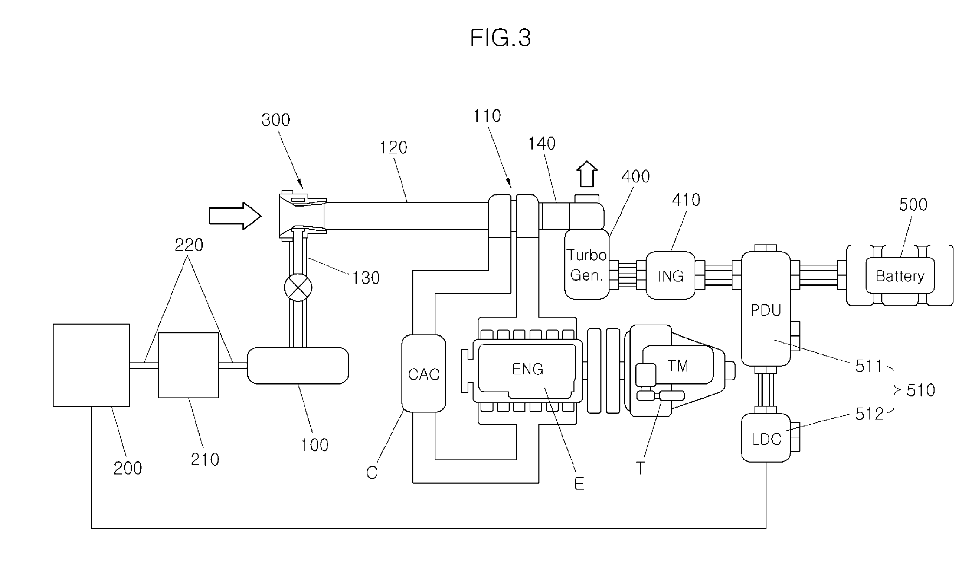

FIG. 3 is a diagram schematically illustrating a turbocharger system for additionally supplying compressed air to an intake manifold according to a second embodiment of the present invention.

As shown in FIG. 3, a turbocharger system according to a second embodiment of the present invention includes an air storage tank 100 provided in a vehicle so as to supply compressed air to an intake manifold 120 of the vehicle provided with a turbocharger 110, a compressor 200 to supply compressed air to the air storage tank 100, a compressed air guidance device 300 provided in the intake manifold 120 to guide mixing of supplied compressed air with introduced atmospheric air, and a turbo generator 400 provided in an exhaust manifold 140 so as to be capable of producing power using exhaust gas of the vehicle.

The turbocharger system includes an air supply control unit 210 provided on a compressed air conduit 220 connecting the compressor 200 to the air storage tank 100.

The air storage tank 100, the compressor 200, the compressed air guidance device 300, and the air supply control unit 210 of the second embodiment are the same as those of the first embodiment, and the second embodiment is provided with the turbo generator 400 at one side of the exhaust manifold 140 from which exhaust gas is discharged.

The turbo generator 400 is a device to regenerate electrical energy using pressure of exhaust gas, and includes a turbine for generation of power rotated by pressure of exhaust gas.

Since an amount of air introduced into a cylinder is plentifully increased by the air storage tank 100, the compressor 200, and the compressed air guidance device 300, the pressure of exhaust gas discharged from the cylinder after combustion is relatively high.

Therefore, the turbine of the turbocharger 110 included in the exhaust manifold 140 rotates at high speed, compared with a typical supercharged internal combustion engine in which compressed air is not introduced into the intake manifold 120 through the compressed air guidance device 300, and thus the discharged exhaust gas has high pressure as well.

The turbo generator 400 rotates the turbine of the turbocharger 110 and generates power using high pressure of exhaust gas.

In addition, the turbocharger system further includes a battery 500 provided in the vehicle in order to store power produced by the turbo generator 400. The turbo generator 400 includes an inverter 410 which converts alternating current power generated by the turbine for generation of power into direct current power.

A power supply device 510 is provided between the turbo generator 400 and the battery 500, and includes the PDU (POWER DISTRIBUTION UNIT) 511 to distribute high-voltage power and the LDC (LOW VOLTAGE DC-DC CONVERTER) 512 to distribute 24V power.

The PDU 511 supplies a power source to an air-con compressor, and supplies power to other devices requiring high-voltage power.

The LDC 512 supplies power to the compressor 200, an EHPS (ELECTIONIC, HYDRAULIC, POWER-STEERING), and a HAVC (HEATING, VENTILATION, AND AIR-CONDITIONING), and supplies power to other devices requiring 24V power.

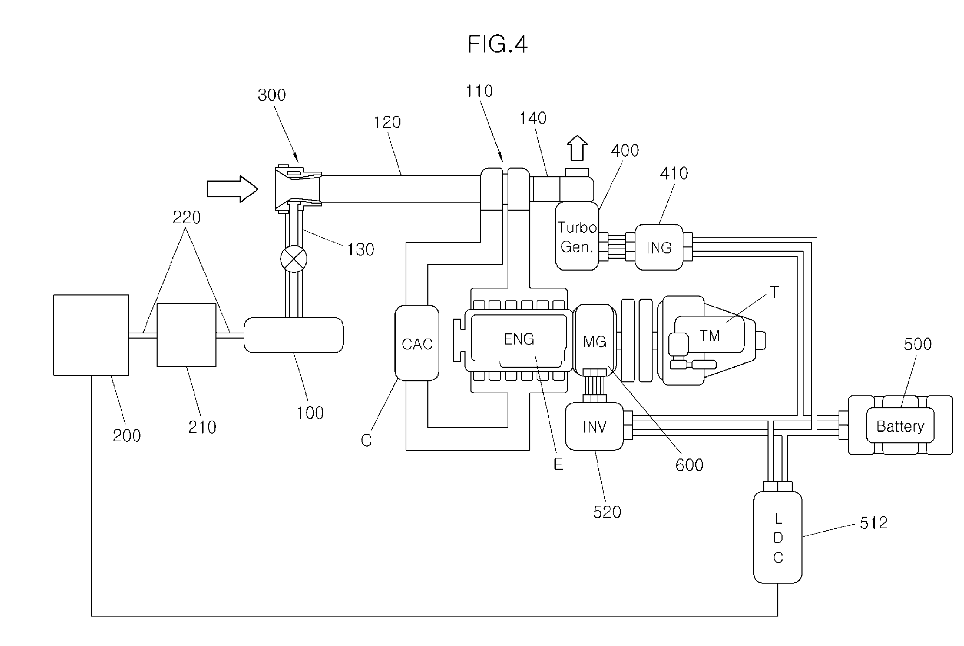

FIG. 4 is a diagram schematically illustrating a turbocharger system for additionally supplying compressed air to an intake manifold according to a third embodiment of the present invention.

As shown in FIG. 4, a turbocharger system according to a third embodiment of the present invention includes an air storage tank 100 provided in a vehicle so as to supply compressed air to an intake manifold 120 of the vehicle provided with a turbocharger 110, a compressor 200 to supply compressed air to the air storage tank 100, a compressed air guidance device 300 provided in the intake manifold 120 to guide mixing of supplied compressed air with introduced atmospheric air, a turbo generator 400 provided in an exhaust manifold 140 so as to be capable of producing power using exhaust gas of the vehicle, a battery 500 to store power produced by the turbo generator 400, and a motor 600 supplied with power from the battery 500 to generate driving force of the vehicle.

The air storage tank 100, the compressor 200, the compressed air guidance device 300, and the air supply control unit 210 of the third embodiment are the same as those of the first embodiment, and the turbo generator 400 and the battery of the third embodiment are the same as those of the second embodiment. The third embodiment is provided with the motor 600 supplied with power from the battery 500 to generate driving force of the vehicle.

The turbo generator 400 includes an inverter 410 which converts the produced power into direct current. The motor 600 includes an inverter 510 which converts the power supplied from the battery 500 into alternating current. In addition, the LDC 512 is provided in the battery 500 to supply power to the compressor.

In the third embodiment of the present invention, the motor 600 is mounted between an internal combustion engine and a transmission T, and is driven using power regenerated through the turbo generator 400 by discharge pressure of exhaust gas.

A typical hybrid vehicle is mainly effective during low speed driving thereof and runs by a motor during low speed driving thereof so as to reduce fuel efficiency. However, since a vehicle to which the third embodiment of the present invention is applied drives the motor 600 using power regenerated by discharge pressure of exhaust gas during low and high speed driving thereof, it may be possible to improve fuel efficiency.

In addition, since the third embodiment of the present invention includes the motor 600 to supply driving force to the vehicle, it may be possible to obtain required driving force even when the displacement of the internal combustion engine is relatively small.

Since power regenerated through the turbo generator 400 by discharge pressure of exhaust gas is used to drive the motor 600, it may be possible to stably supply power during driving of the motor 600 even when the size of the battery 500 is relatively small. Accordingly, the total weight of the vehicle may be reduced and the vehicle may run longer with less fuel.

In accordance with a turbocharger system for additionally supplying compressed air to an intake manifold according to an exemplary embodiment of the present invention, a sufficient amount of air may be supplied into a cylinder chamber even at a high RPM since air resistance is not generated during high speed driving, and it may be possible to increase output of an internal combustion engine since compressed air is able to be additionally supplied into the cylinder chamber.

In addition, in a case of a typical turbocharger vehicle, there is a problem in that smoke is generated since fuel is oversupplied to an engine whereas air is less supplied thereto during generation of turbo lag. However, the present invention may reduce smoke since a compressor is operated together with starting of a vehicle and a sufficient amount of air is supplied to an intake manifold.

In addition, since electrical energy is generated while a turbo generator is rotated by pressure of exhaust gas in a high speed mode of an engine, the electrical energy allows a drive motor of a hybrid vehicle to be operated or is used to power auxiliary electric devices. Therefore, it may be possible to constitute a variety of systems using regenerative power.

In addition, since compressed air is sufficiently supplied to an internal combustion engine by an amount required therefor through an air storage tank having a certain size, a compressor, and a compressed air guidance device, a large turbocharger is not required to be installed in order to improve efficiency of the internal combustion engine. Therefore, it may be possible to utilize a space of an engine room.

In addition, since a compressor is mounted to a turbocharger system, it may be possible to stably supply compressed air having certain pressure regardless of engine speed to an intake manifold.

Furthermore, in accordance with the present invention, it may be possible to increase efficiency and output of an internal combustion engine by supercharging thereof. Accordingly, an internal combustion engine having a low displacement according to an exemplary embodiment of the present invention is mounted to a large vehicle or a heavy truck, with the consequence that it may be possible to improve fuel efficiency due to a reduction in weight of the vehicle and to reduce costs required to manufacture the large vehicle or the heavy truck.

For convenience in explanation and accurate definition in the appended claims, the terms "upper", "lower", "inner" and "outer", are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A turbocharger(110) system comprising:
an air storage tank(100) provided in a vehicle so as to supply compressed air to an intake manifold(120) of the vehicle provided with a turbocharger(110);
a compressor(200) connected to the air storage tank(100) to supply compressed air to the air storage tank(100); and
a compressed air guidance device(300) connected to the air storage tank(100) and provided in the intake manifold(120) to guide mixing of the compressed air of the air storage tank(100) with introduced atmospheric air.

2. The turbocharger(110) system of claim 1, wherein an air supply control unit(210) is provided on a compressed air conduit(220) connecting the compressor(200) to the air storage tank(100).

3. The turbocharger(110) system of claim 1, wherein the compressed air guidance device(300) comprises:
a cylindrical mounting portion(310) which is mounted to one opened end of the intake manifold(120) and is fitted into the one opened end of the intake manifold(120);
a nozzle portion(320) to guide the introduced atmospheric air to the intake manifold(120);
a connection portion(330) connecting the cylindrical mounting portion(310) to the air storage tank(100) through a compressed air conduit(220) coupled to the connection portion(330);
an air passage(340) formed around an outer periphery of the cylindrical mounting portion(310) as a space so as to have a ring shape of a predetermined width, wherein the air passage(340) is fluid-connected to the connection portion(330); and
an insertion portion(350) formed by cutting the cylindrical mounting portion(310) in a circular shape such that the compressed air is injected from the air passage(340) to a tip of the nozzle portion(320) through the insertion portion(350) toward the intake manifold(120).

4. The turbocharger(110) system of claim 3,
wherein the compressed air introduced into the air passage(340) through the connection portion(330) turns within the air passage(340);
wherein the compressed air turning within the air passage(340) is vertically injected toward the intake manifold(120) through the insertion portion(350); and
wherein a pressure of the intake manifold(120) is relatively decreased by the compressed air injected through the insertion portion(350), compared with an atmospheric pressure, so that the atmospheric air is introduced into the intake manifold(120).

5. A turbocharger(110) generation system comprising:
an air storage tank(100) provided in a vehicle so as to supply compressed air to an intake manifold(120) of the vehicle provided with a turbocharger(110);
a compressor(200) connected to the air storage tank(100) to supply compressed air to the air storage tank(100);
a compressed air guidance device(300) provided in the intake manifold(120) to guide mixing of the compressed air of the air storage tank(100) with an introduced atmospheric air; and
a turbo generator(400) provided in an exhaust manifold(140) so as to produce power using exhaust gas of the vehicle.

6. The turbocharger(110) generation system of claim 5, wherein an air supply control unit(210) is provided on a compressed air conduit(220) connecting the compressor(200) to the air storage tank(100).

7. The turbocharger(110) generation system of claim 5, further comprising a battery(500) provided in the vehicle in order to store power produced by the turbo generator(400).

8. The turbocharger(110) generation system of claim 7, wherein the turbo generator(400) comprises an inverter(410) which converts the power generated by the turbo generator(400) into direct current.

9. The turbocharger(110) generation system of claim 8, wherein a power supply device(510) is provided between the turbo generator(400) and the battery(500).

10. The turbocharger(110) generation system of claim 9, wherein the power supply device(510) comprises a PDU (POWER DISTRIBUTION UNIT)(511) to distribute high-voltage power and an LDC (LOW VOLTAGE DC-DC CONVERTER)(512) to distribute 24V power.

11. A turbocharger(110) generation system for a hybrid vehicle comprising:
an air storage tank(100) provided in a vehicle so as to supply compressed air to an intake manifold(120) of the vehicle provided with a turbocharger(110);
a compressor(200) connected to the air storage tank(100) to supply compressed air to the air storage tank(100);
a compressed air guidance device(300) provided in the intake manifold(120) to guide mixing of the compressed air of the air storage tank(100) with an introduced atmospheric air;
a turbo generator(400) provided in an exhaust manifold(140) so as to produce power using exhaust gas of the vehicle;
a battery(500) to store power produced by the turbo generator(400) ; and
a motor(600) supplied with the power from the battery(500) to generate driving force of the vehicle.

12. The turbocharger(110) generation system for the hybrid vehicle of claim 11, wherein the turbo generator(400) comprises an inverter(410) which converts the power produced by the turbo generator(400) into direct current.

13. The turbocharger(110) generation system for the hybrid vehicle of claim 11, wherein the motor(600) comprises an inverter(410) which converts the power supplied from the battery(500) into alternating current.
